# EUROPÄISCHE PATENTSCHRIFT

(11) **EP 3 350 034 B1**
(45) Veröffentlichungstag und Bekanntmachung des Hinweises auf die Patenterteilung: **29.01.2020**
(21) Anmeldenummer: 16739173.9
(22) Anmeldetag: 18.07.2016
(51) Int. Cl.: B60T 7/04, B60T 11/18, B60T 11/20, B60T 13/74

(54) **LAGERVORRICHTUNG UND ELEKTROMECHANISCHER BREMSKRAFTVERSTÄRKER**
BEARING DEVICE AND ELECTROMECHANICAL BRAKE FORCE BOOSTER
DISPOSITIF PALIER ET SERVOFREIN ÉLECTROMÉCANIQUE

(30) Priorität: 14.09.2015 DE 102015217528
(43) Veröffentlichungstag der Anmeldung: 25.07.2018
(73) Patentinhaber: Robert Bosch GmbH, 70442 Stuttgart (DE)
(72) Erfinder: PANUNZIO, Giammaria, 71634 Ludwigsburg (DE); FERGUSON, Ben, 87549 Rettenberg (DE); HATT, Ignaz, 87474 Buchenberg (DE); NAGEL, Willi, 71686 Remseck / Hochdorf (DE)
(86) Internationale Anmeldenummer: PCT/EP2016/067014
(87) Internationale Veröffentlichungsnummer: WO 2017/045805

(56) Entgegenhaltungen:
- EP-A1- 2 292 483
- EP-A1- 2 465 741
- EP-A1- 2 641 796
- WO-A1-2011/147609
- WO-A1-2013/045154
- CN-A- 103 802 814
- DE-A1-102010 003 822
- DE-A1-102012 205 611
- DE-A1-102013 006 795
- FR-A1- 2 947 228
- US-A1- 2014 090 371

## Beschreibung

Die Erfindung betrifft eine Lagervorrichtung für einen elektromechanischen Bremskraftverstärker eines Kraftfahrzeuges. Die Erfindung betrifft des Weiteren einen elektromechanischen Bremskraftverstärker für ein Kraftfahrzeug.

### Stand der Technik

Für die zukünftigen Antriebskonzepte von Kraftfahrzeugen werden alternative Bremsdruckaufbauvorrichtungen benötigt, da wenig, oder kein Vakuum vorliegt, um einen konventionellen Vakuum-Bremskraftverstärker zu betreiben. Hierzu wurden elektromotorische Bremskraftverstärker entwickelt. Ein elektromechanischer Bremskraftverstärker ist z.B. aus der FR 2 947 228 A1 bekannt.

Die DE 10 2012 014 361 A1 offenbart eine Betätigungseinrichtung für einen Hauptbremszylinder eines Kraftfahrzeuges, umfassend ein Gehäuse zur Anordnung zwischen dem Hauptbremszylinder und einem Bremspedal, durch das ein Druckorgan zur Betätigung eines Betätigungskolbens des Hauptbremszylinders verläuft, einen Elektromotor, eine Schnecke, die durch den Elektromotor angetrieben ist und das Druckorgan kreuzt, und ein in dem Gehäuse angeordnetes Getriebe, das die Schnecke mit dem Betätigungskolben derart koppelt, um eine Drehbewegung der Schnecke in eine Translationsbewegung des Betätigungskolbens zu übersetzen.

Darüber hinaus sind weltweit drei dominierende Kundenschnittstellen an einer Motorraumspritzwand des Kraftfahrzeuges zur Befestigung von Vakuum-Bremskraftverstärkern oder elektromechanischen Bremskraftverstärkern bekannt. Wesentliche Unterscheidungsmerkmale dieser Kundenschnittstellen sind eine Anzahl von Anschraubpunkten, ein Lochbild und ein Lochabstand. Der Erfindung liegt somit die Aufgabe zugrunde, eine Lagervorrichtung für einen elektromechanischen Bremskraftverstärker eines Kraftfahrzeuges und einen elektromechanischen Bremskraftverstärker für ein Kraftfahrzeug bereitzustellen, welche für die vorstehend beschriebenen Kundenschnittstellen eine möglichst geringe Anzahl von Komponenten zur Anbindung an die Kundenschnittstellen erfordern.

Die Aufgabe wird mit einer Lagervorrichtung für einen elektromechanischen Bremskraftverstärker eines Kraftfahrzeuges mit den Merkmalen des Patentanspruchs 1 gelöst. Des Weiteren wird die Aufgabe mit einem elektromechanischen Bremskraftverstärker für ein Kraftfahrzeug mit den Merkmalen des Patentanspruchs 6 gelöst.

### Offenbarung der Erfindung

Die vorliegende Erfindung schafft eine Lagervorrichtung für einen elektromechanischen Bremskraftverstärker, wobei die Lagervorrichtung an einer Spindel des elektromechanischen Bremskraftverstärkers derart anordbar ist, dass die Spindel mittels eines Betriebs eines Elektromotors des elektromechanischen Bremskraftverstärkers linear verstellbar ist, wodurch die Lagervorrichtung zusammen mit der Spindel mitverstellbar ist, und ein erstes Gleitlager in einer ersten Aufnahmeöffnung der Lagervorrichtung und ein zweites Gleitlager in einer zweiten Aufnahmeöffnung der Lagervorrichtung so einsetzbar oder eingesetzt sind, dass die Lagervorrichtung zusätzlich über das in die erste Aufnahmeöffnung eingesetzte erste Gleitlager an einem ersten Tragelement des elektromechanischen Bremskraftverstärkers anordbar ist und über das in die zweite Aufnahmeöffnung eingesetzte zweite Gleitlager an einem zweiten Tragelement des elektromechanischen Bremskraftverstärkers anordbar ist, so dass die mit der Spindel mitverstellte Lagervorrichtung zwischen den beiden Tragelementen führbar ist, wobei wahlweise bei einer schwimmenden Lagerung des zweiten Gleitlagers in der zweiten Aufnahmeöffnung das erste Gleitlager in der ersten Aufnahmeöffnung fixierbar ist oder bei einer schwimmenden Lagerung des ersten Gleitlagers in der ersten Aufnahmeöffnung das zweite Gleitlager in der zweiten Aufnahmeöffnung fixierbar ist, und wobei, sofern das erste Gleitlager an dem ersten Befestigungsmittel fixiert ist, die Lagervorrichtung zwischen den beiden um einen ersten Abstand beabstandeten Tragelementen anordbar ist, und, sofern das zweite Gleitlager an dem zweiten Befestigungsmittel fixiert ist, die Lagervorrichtung zwischen den beiden um einen zweiten Abstand beabstandeten Tragelementen anordbar ist.

Die vorliegende Erfindung schafft des Weiteren einen elektromechanischen Bremskraftverstärker für ein Kraftfahrzeug, wobei der elektromechanische Bremsverstärker ein erstes Tragelement und ein zweites Tragelement aufweist, wobei sich die Längsachsen der Tragelemente parallel zu der Geraden erstrecken, wobei eine Lagervorrichtung an der Spindel derart angeordnet ist, dass die Lagervorrichtung zusammen mit der Spindel verstellbar ist, wobei ein erstes Gleitlager zum Lagern des ersten Tragelements in eine erste Aufnahmeöffnung der Lagervorrichtung eingesetzt ist und ein zweites Gleitlager zum Lagern des zweiten Tragelements in eine zweite Aufnahmeöffnung der Lagervorrichtung eingesetzt ist, wobei wahlweise das erste Gleitlager in der ersten Aufnahmeöffnung fixierbar ist oder das zweite Gleitlager in der zweiten Aufnahmeöffnung fixierbar ist, und wobei das erste Gleitlager in einem ersten Abstand zur Gerade an der Lagervorrichtung fixierbar ist und das zweite Gleitlager in einem zweiten Abstand ungleich dem ersten Abstand zur Gerade an der Lagervorrichtung fixierbar ist.

Eine Idee der vorliegenden Erfindung ist es, durch Vorsehen einer Fixierbarkeit des ersten Gleitlagers oder des zweiten Gleitlagers an einer jeweiligen Position in einer Aufnahmeöffnung der Lagervorrichtung, wobei die jeweilige Position einen unterschiedlichen Abstand zwischen dem ersten Gleitlager und dem zweiten Gleitlager aufweist, es zu ermöglichen, dass sämtliche bekannten Kundenschnittstellen, welche unterschiedliche Lochabstände aufweisen, an eine einzige Lagervorrichtung der Spindel anbindbar sind. Die Lagervorrichtung der Spindel lagert diese an dem ersten Tragelement und dem zweiten Tragelement, welche durch Querkräfte bzw. Drehmomenteinflüsse bewirkte Kippwinkel der Spindel sowie mit der Spindel verbundenen Komponenten kompensieren bzw. anpassen.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass die Lagervorrichtung eine erste Befestigungsöffnung aufweist, an welcher das erste Gleitlager durch Ausrichten einer Befestigungsöffnung des ersten Gleitlagers zu der ersten Befestigungsöffnung der Lagervorrichtung und Einfügen eines Befestigungsmittels in die Befestigungsöffnung des ersten Gleitlagers und die erste Befestigungsöffnung der Lagervorrichtung in der ersten Aufnahmeöffnung fixierbar ist. Das erste Gleitlager kann somit an einer gewünschten Position in der ersten Aufnahmeöffnung der Lagervorrichtung fixiert werden.

Gemäß einer weiteren bevorzugten Weiterbildung ist vorgesehen, dass die Lagervorrichtung eine zweite Befestigungsöffnung aufweist, an welcher das zweite Gleitlager durch Ausrichten einer Befestigungsöffnung des zweiten Gleitlagers zu der zweiten Befestigungsöffnung der Lagervorrichtung und Einfügen eines Befestigungsmittels in die Befestigungsöffnung des zweiten Gleitlagers und die zweite Befestigungsöffnung der Lagervorrichtung in der zweiten Aufnahmeöffnung fixierbar ist. Somit kann das zweite Gleitlager an einer gewünschten Position in der zweiten Aufnahmeöffnung der Lagervorrichtung fixiert werden.

Gemäß einer weiteren bevorzugten Weiterbildung ist vorgesehen, dass die Lagervorrichtung einen Mittenabschnitt, einen ersten Endabschnitt und einen zweiten Endabschnitt aufweist, wobei die Lagervorrichtung derart gekröpft ausgebildet ist, dass der Mittenabschnitt im montierten Zustand der Lagervorrichtung in einer, zu einer Verstellachse der Spindel senkrechten ersten Ebene angeordnet ist, und wobei der erste Endabschnitt und der zweite Endabschnitt der Lagervorrichtung zumindest teilweise in einer, zu der Verstellachse der Spindel senkrechten, von der ersten Ebene beabstandeten zweiten Ebene angeordnet sind. Durch die gekröpfte Ausbildung der Lagervorrichtung kann somit in vorteilhafter Weise zusätzlicher Bauraum zwischen der Lagervorrichtung und einem benachbart zu der Lagervorrichtung angeordneten Ventilkörper bereitgestellt werden.

Gemäß einer weiteren bevorzugten Weiterbildung ist vorgesehen, dass der Mittenabschnitt der Lagervorrichtung in einem ersten Randbereich eine erste Aussparung und/oder in einem zweiten Randbereich eine zu der ersten Aussparung achsensymmetrisch angeordnete zweite Aussparung aufweist, welche dazu ausgebildet ist, im montierten Zustand der Lagervorrichtung einen Bauraum für ein Zahnrad des Getriebes bereitzustellen. Somit kann die Lagervorrichtung in vorteilhafter Weise platzsparend im Getriebe angeordnet werden, ohne dass andere Komponenten versetzt werden müssen.

Gemäß einer weiteren bevorzugten Weiterbildung ist vorgesehen, dass das erste und zweite Befestigungsmittel stiftförmig, vorzugsweise durch einen Stahlstift, ausgebildet ist, welcher im montierten Zustand in der Befestigungsöffnung des ersten Gleitlagers oder des zweiten Gleitlagers und in der ersten Befestigungsöffnung der Lagervorrichtung oder der zweiten Befestigungsöffnung der Lagervorrichtung eine Presspassung aufweist. Somit kann das erste Gleitlager oder das zweite Gleitlager sicher an der Lagervorrichtung befestigt werden.

Gemäß einer weiteren bevorzugten Weiterbildung ist vorgesehen, dass die Befestigungsöffnung des ersten Gleitlagers und des zweiten Gleitlagers eine erste Bohrung und eine zweite Bohrung aufweist, welche durch eine an einem Außenumfang des ersten Gleitlagers und des zweiten Gleitlagers umlaufend ausgebildete Nut voneinander getrennt sind, wobei die erste Bohrung als Durchgangsbohrung ausgebildet ist und die zweite Bohrung einen Absatz aufweist, wobei das erste oder zweite Befestigungsmittel derart in das erste Gleitlager oder das zweite Gleitlager eingebracht ist, dass dieses an dem Absatz der zweiten Bohrung anschlägt und die erste Bohrung durch einen Verstemmprozess verformt und/oder geschlossen ist. Somit kann das erste Gleitlager oder das zweite Gleitlager sicher an der Lagervorrichtung befestigt werden.

Gemäß einer weiteren bevorzugten Weiterbildung ist vorgesehen, dass das erste Gleitlager in die erste Aufnahmeöffnung der Lagervorrichtung mittels der an einem Außenumfang des ersten Gleitlagers umlaufend ausgebildeten Nut eingesetzt ist, wobei zwischen der Lagervorrichtung und der Nut ein Spalt ausgebildet ist, wobei das erste Gleitlager in der Nut relativ zu der Lagervorrichtung um eine parallel zur Lagervorrichtung angeordneten Achse dreh- und kippbar gelagert ist, und wobei das zweite Gleitlager in die zweite Aufnahmeöffnung der Lagervorrichtung mittels der an einem Außenumfang des zweiten Gleitlagers umlaufend ausgebildeten Nut eingesetzt ist, wobei zwischen der Lagervorrichtung und der Nut ein Spalt ausgebildet ist, wobei das zweite Gleitlager in der Nut relativ zu der Lagervorrichtung um eine parallel zur Lagervorrichtung angeordneten Achse dreh- und kippbar gelagert ist. Bei einer durch beispielsweise Toleranzen bedingten Verkippung der Spindel und der mit der Spindel fest verbundenen Lagervörrichtung ist das Gleitlager somit in der Lage, durch ein Verkippen in der Nut relativ zu der Lagervorrichtung das Verkippen der Spindel auszugleichen, so dass die Spindel durch die Lagervorrichtung ohne zu verklemmen entlang dem ersten und zweiten Tragelement führbar ist.

Gemäß einer weiteren bevorzugten Weiterbildung ist vorgesehen, dass das erste Gleitlager entlang der am Außenumfang des ersten Gleitlagers umlaufend ausgebildeten Nut in die erste Aufnahmeöffnung der Lagervorrichtung eingesetzt ist, wobei eine Form des ersten Gleitlagers an eine Form der ersten Aufnahmeöffnung der Lagervorrichtung angepasst ist, und wobei das zweite Gleitlager entlang der am Außenumfang des zweiten Gleitlagers umlaufend ausgebildeten Nut in die zweite Aufnahmeöffnung der Lagervorrichtung eingesetzt ist, wobei eine Form des zweiten Gleitlagers an eine Form der zweiten Aufnahmeöffnung der Lagervorrichtung angepasst ist. Somit können das erste Gleitlager und das zweite Gleitlager in vorteilhafter Weise einfach und passgenau in die jeweiligen Aufnahmeöffnungen der Lagervorrichtung eingesetzt werden.

Gemäß einer weiteren bevorzugten Weiterbildung ist vorgesehen, dass die am Außenumfang des ersten Gleitlagers und des zweiten Gleitlagers umlaufend ausgebildete Nut an einem vorgegebenen Abschnitt eine verringerte Breite und/oder Tiefe aufweist, im Bereich welcher das erste Gleitlager oder das zweite Gleitlager bei einem Transport des elektromechanischen Bremskraftverstärkers an einer Wand der Lagervorrichtung festklemmbar ist. Somit kann eine einfache und kostengünstige Transportsicherung bereitgestellt werden, da für die Sicherung des Transports keine zusätzlichen Komponenten erforderlich sind. Gemäß einer weiteren bevorzugten Weiterbildung ist vorgesehen, dass das erste Tragelement und das zweite Tragelement einen Zuganker oder ein Rohr mit innenliegender Durchgangsschraube aufweisen, wobei der Zuganker und das Rohr mit innenliegender Durchgangsschraube aus Stahl ausgebildet sind, und wobei der Zuganker einen geringeren Durchmesser als das Rohr mit innenliegender Durchgangsschraube aufweist. Somit sind das erste Tragelement und das zweite Tragelement in vorteilhafter Weise dazu ausgebildet, Kräfte resultierend von der Kundenschnittstelle sowie Getriebe-Reaktionskräfte aufzunehmen.

Gemäß einer weiteren bevorzugten Weiterbildung ist vorgesehen, dass das erste Gleitlager und das zweite Gleitlager baugleich ausgebildet sind. Somit kann die Anzahl erforderlicher Bauteile in vorteilhafter Weise gering gehalten werden.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Längsschnittansicht eines elektromechanischen Bremskraftverstärkers für ein Kraftfahrzeug gemäß einer ersten Ausführungsform der Erfindung;
- Fig. 2a: eine perspektivische Darstellung eines Getriebes des elektromechanischen Bremskraftverstärkers für das Kraftfahrzeug gemäß der ersten Ausführungsform der Erfindung;
- Fig. 2b: eine perspektivische Darstellung einer Lagervorrichtung des elektromechanischen Bremskraftverstärkers für das Kraftfahrzeug gemäß einer zweiten Ausführungsform der Erfindung;
- Fig. 3a: eine perspektivische Darstellung der Lagervorrichtung des elektromechanischen Bremskraftverstärkers für das Kraftfahrzeug gemäß der ersten Ausführungsform der Erfindung;
- Fig. 3b: eine perspektivische Darstellung der Lagervorrichtung des elektromechanischen Bremskraftverstärkers für das Kraftfahrzeug gemäß der ersten Ausführungsform der Erfindung;
- Fig. 4: eine perspektivische Darstellung der Lagervorrichtung des elektromechanischen Bremskraftverstärkers für das Kraftfahrzeug gemäß der ersten Ausführungsform der Erfindung;
- Fig. 5: eine perspektivische Darstellung der Lagervorrichtung des elektromechanischen Bremskraftverstärkers für das Kraftfahrzeug gemäß der ersten Ausführungsform der Erfindung;
- Fig. 6: eine perspektivische Darstellung der Lagervorrichtung des elektromechanischen Bremskraftverstärkers für das Kraftfahrzeug gemäß der ersten Ausführungsform der Erfindung;
- Fig. 7: (eine perspektivische Darstellung der Lagervorrichtung des elektromechanischen Bremskraftverstärkers für das Kraftfahrzeug gemäß der ersten Ausführungsform der Erfindung;

In den Figuren der Zeichnungen bezeichnen gleiche Bezugszeichen gleiche oder funktionsgleiche Elemente, Bauteile oder Komponenten, soweit nichts Gegenteiliges angegeben ist.

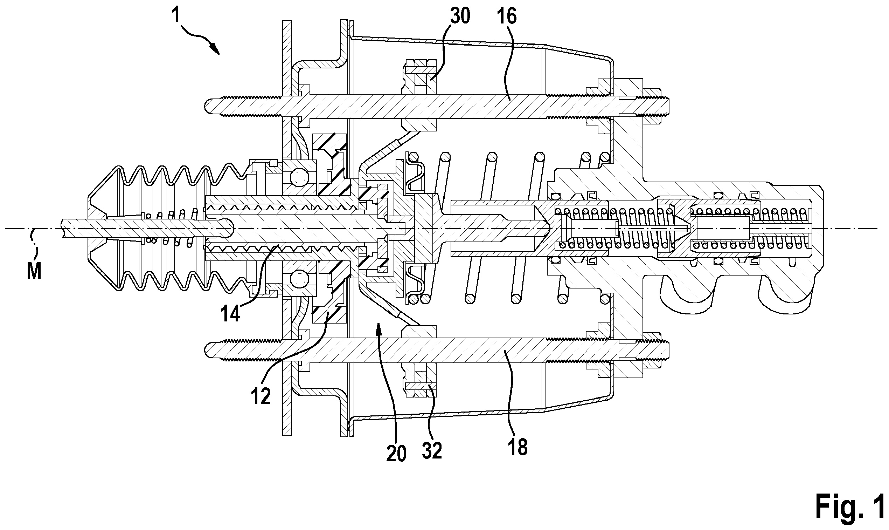

Fig. 1 zeigt eine Längsschnittansicht eines elektromechanischen Bremskraftverstärkers für ein Kraftfahrzeug gemäß einer ersten Ausführungsform der Erfindung.

Der elektromechanische Bremskraftverstärker 1 für ein Kraftfahrzeug weist einen Elektromotor (nicht eingezeichnet) auf, welcher über ein Getriebe 12 mit einer Spindel 14 derart verbunden ist, dass die Spindel 14 mittels eines Betriebs des Elektromotors (nicht eingezeichnet) linear so verstellbar ist, dass eine Mittellängsachse M der Spindel 14 entlang einer Gerade verstellbar ist.

Der elektromechanische Bremskraftverstärker 1 weist des Weiteren ein erstes Tragelement 16 und ein zweites Tragelement 18 auf. Die Längsachsen der Tragelemente 16, 18 erstrecken sich parallel zu der Geraden. Eine Lagervorrichtung 20 ist derart an der Spindel 14 angeordnet, dass die Lagervorrichtung 20 zusammen mit der Spindel 14 verstellbar ist. Hierzu ist ein erstes Gleitlager 30 zum Lagern des ersten Tragelements 16 in eine (in Fig. 1 nicht gezeigte) erste Aufnahmeöffnung der Lagervorrichtung 20 eingesetzt. Des Weiteren ist hierzu ein zweites Gleitlager 32 zum Lagern des zweiten Tragelements 18 in eine (in Fig. 1 nicht gezeigte) zweite Aufnahmeöffnung 23 der Lagervorrichtung 20 eingesetzt. Es ist wahlweise das erste Gleitlager 30 in der (in Fig. 1 nicht gezeigten) ersten Aufnahmeöffnung fixierbar oder das zweite Gleitlager 32 in der (in Fig. 1 nicht gezeigten) zweiten Aufnahmeöffnung fixierbar. Das erste Gleitlager 30 ist hierbei in einem ersten Abstand zum zweiten Gleitlager 32 fixierbar oder alternativ ist das zweite Gleitlager 32 in einem zweiten Abstand ungleich dem ersten Abstand zum ersten Gleitlager 30 fixierbar.

Des Weiteren weisen das erste Tragelement 16 und das zweite Tragelement 18 vorzugsweise einen Zuganker auf. Alternativ können das erste Tragelement 16 und das zweite Tragelement 18 beispielsweise ein Rohr mit innenliegender Durchgangsschraube aufweisen. Der Zuganker oder alternativ das Rohr mit innenliegender Durchgangsschraube sind vorzugsweise aus Stahl ausgebildet. Der Zuganker weist vorzugsweise einen geringeren Durchmesser als das Rohr mit innenliegender Durchgangsschraube auf.

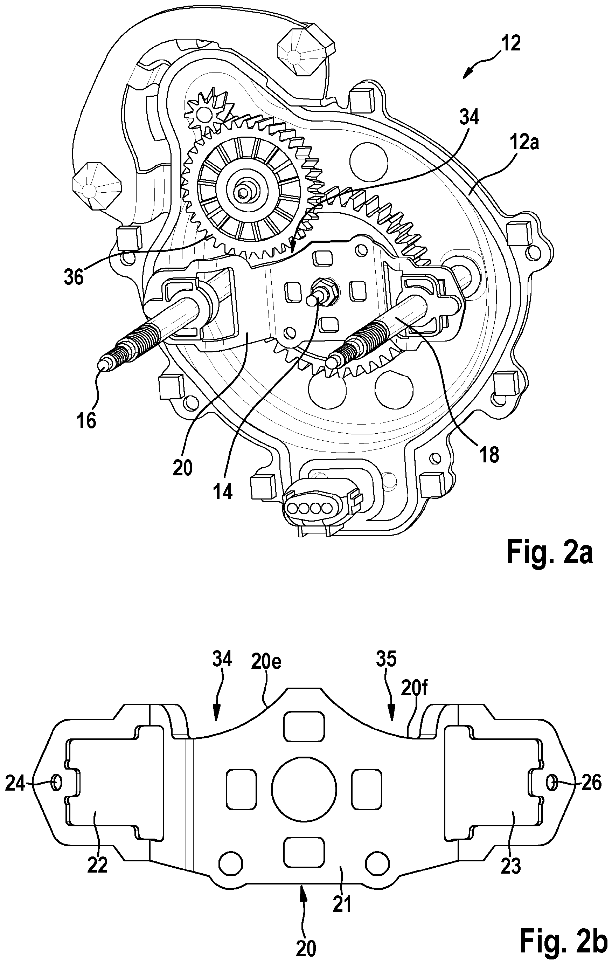

Fig. 2a zeigt eine perspektivische Darstellung eines Getriebes des elektromechanischen Bremskraftverstärkers für das Kraftfahrzeug gemäß der ersten Ausführungsform der Erfindung.

An einem Getriebegehäuseboden 12a des Getriebes sind vorzugsweise das erste Tragelement 16 und das zweite Tragelement 18 befestigt. Des Weiteren ist die Lagervorrichtung 20 ebenfalls benachbart zu dem Getriebegehäuseboden 12a des Getriebes 12 angeordnet und mit der Spindel 14 vorzugsweise verschweißt. Alternativ kann die Lagervorrichtung 20 mit der Spindel beispielsweise einteilig ausgebildet oder in anderer geeigneter Weise verbunden sein. Die Lagervorrichtung 20 weist in der vorliegenden Ausführungsform eine Aussparung 34 auf, welche eine Kollision mit einem Zahnrad 36 des Getriebes 12 verhindert und ermöglicht, dass die Lagervorrichtung 20 in platzsparender Weise in dem Getriebe 12 angeordnet werden kann.

Fig. 2b zeigt eine perspektivische Darstellung einer Lagervorrichtung des elektromechanischen Bremskraftverstärkers für das Kraftfahrzeug gemäß einer zweiten Ausführungsform der Erfindung.

In der Lagervorrichtung 20 sind eine erste Aufnahmeöffnung 22 und eine zweite Aufnahmeöffnung 23 ausgebildet. In die erste Aufnahmeöffnung 22 ist vorzugsweise ein erstes (in Fig. 2b nicht gezeigtes) Gleitlager aufnehmbar. In die zweite Aufnahmeöffnung 23 ist vorzugsweise ein (in Fig. 2b nicht gezeigtes) zweites Gleitlager aufnehmbar. Des Weiteren weist die Lagervorrichtung 20 an einem Endabschnitt benachbart zu der ersten Aufnahmeöffnung 22 eine erste Befestigungsöffnung 24 auf. Die erste Befestigungsöffnung 24 ist vorzugsweise dazu ausgebildet, das (in Fig. 2b nicht gezeigte) erste Gleitlager durch ein (in Fig. 2b nicht gezeigtes) Befestigungsmittel an der Lagervorrichtung 20 zu befestigen. Des Weiteren weist die Lagervorrichtung 20 an einem Endabschnitt benachbart zu der zweiten Aufnahmeöffnung 23 eine zweite Befestigungsöffnung 26 auf. Die zweite Befestigungsöffnung 26 ist vorzugsweise dazu ausgebildet, das (in Fig. 2b nicht gezeigte) zweite Gleitlager durch ein (in Fig. 2b nicht gezeigtes) Befestigungsmittel an der Lagervorrichtung 20 zu befestigen.

Darüber hinaus sind in einem ersten Randbereich 20e die erste Aussparung 34 in der Lagervorrichtung 20 ausgebildet. In einem zweiten Randbereich 20f ist vorzugsweise eine zweite Aussparung 35 ausgebildet. Die zweite Aussparung 35 ist vorzugsweise zu der ersten Aussparung 34 achsensymmetrisch angeordnet. Somit kann die Lagervorrichtung 20 gemäß der vorliegenden Ausführungsform auch bei gespiegelter Anordnung des Getriebes des elektromechanischen Bremskraftverstärkers ohne weitere Änderungen verwendet werden.

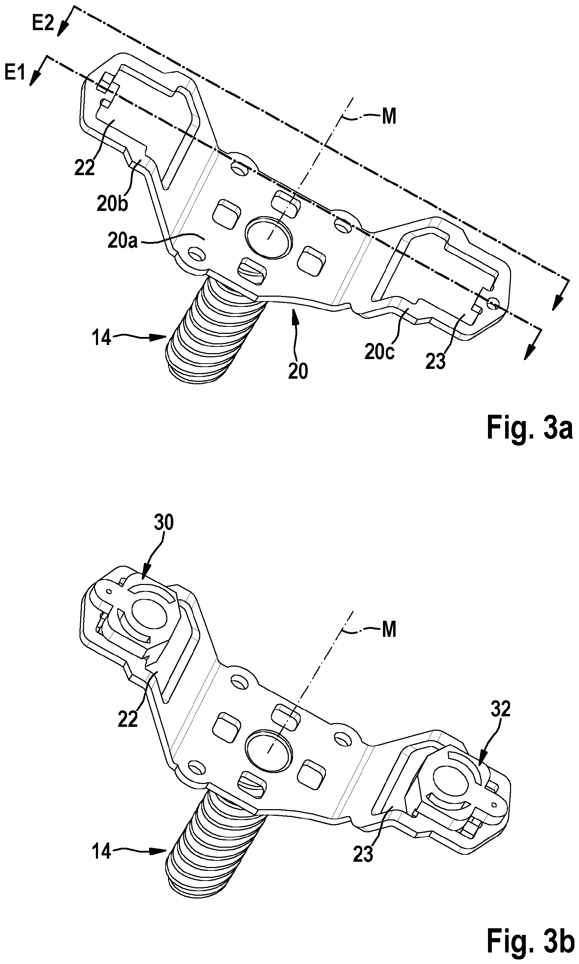

Fig. 3a zeigt eine perspektivische Darstellung der Lagervorrichtung des elektromechanischen Bremskraftverstärkers für das Kraftfahrzeug gemäß der ersten Ausführungsform der Erfindung. Die Lagervorrichtung 20 weist vorzugsweise einen Mittenabschnitt 20a, einen ersten Endabschnitt 20b und einen zweiten Endabschnitt 20c auf. Die Lagervorrichtung 20 ist vorzugsweise derart gekröpft ausgebildet, dass der Mittenabschnitt 20a im montierten Zustand der Lagervorrichtung 20 in einer, zu der Mittellängsachse M der Spindel 14 senkrechten ersten Ebene angeordnet ist, und wobei der erste Endabschnitt 20b und der zweite Endabschnitt 20c der Lagervorrichtung 20 zumindest teilweise in einer, zu der Mittellängsachse M der Spindel 14 senkrechten zweiten Ebene E2 angeordnet sind.

Fig. 3b zeigt eine perspektivische Darstellung der Lagervorrichtung des elektromechanischen Bremskraftverstärkers für das Kraftfahrzeug gemäß der ersten Ausführungsform der Erfindung.

Das erste Gleitlager 30 und das zweite Gleitlager 32 sind vorzugsweise baugleich ausgebildet. Das erste Gleitlager 30 ist vorzugsweise entlang einer (in Fig. 3b nicht gezeigten) am Außenumfang des ersten Gleitlagers 30 umlaufend ausgebildeten Nut in die erste Aufnahmeöffnung 22 der Lagervorrichtung 20 eingesetzt. Eine Form des ersten Gleitlagers 30 ist vorzugsweise an eine Form der ersten Aufnahmeöffnung 22 der Lagervorrichtung 20 angepasst.

Das zweite Gleitlager 32 ist vorzugsweise entlang einer (in Fig. 3b nicht gezeigten) am Außenumfang des zweiten Gleitlagers 32 umlaufend ausgebildete Nut in die zweite Aufnahmeöffnung 23 der Lagervorrichtung 20 eingesetzt. Eine Form des zweiten Gleitlagers 32 ist vorzugsweise an eine Form der zweiten Aufnahmeöffnung 23 der Lagervorrichtung 20 angepasst.

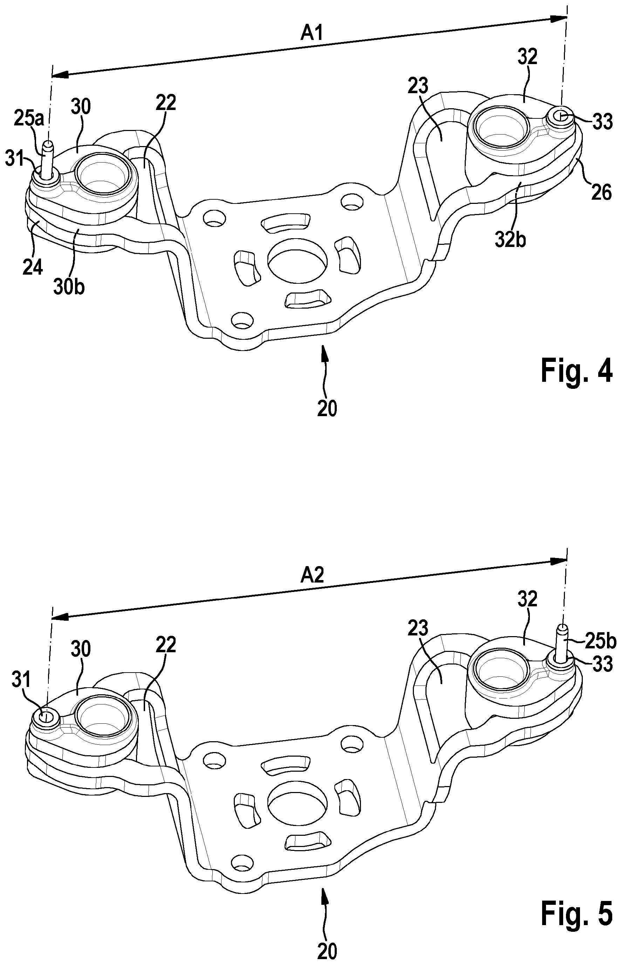

Fig. 4 zeigt eine perspektivische Darstellung der Lagervorrichtung des elektromechanischen Bremskraftverstärkers für das Kraftfahrzeug gemäß der ersten Ausführungsform der Erfindung. Die Lagervorrichtung 20 weist vorzugsweise eine erste Befestigungsöffnung 24 auf.

Das erste Gleitlager 30 ist vorzugsweise entlang der am Außenumfang des ersten Gleitlagers 30 umlaufend ausgebildeten Nut 30b in die erste Aufnahmeöffnung 22 der Lagervorrichtung 20 eingesetzt. Das zweite Gleitlager 32 ist vorzugsweise entlang einer am Außenumfang des zweiten Gleitlagers 32 umlaufend ausgebildete Nut 32b in die zweite Aufnahmeöffnung 23 der Lagervorrichtung 20 eingesetzt.

Das erste Gleitlager 30 weist vorzugsweise eine Befestigungsöffnung 31 auf. Die erste Befestigungsöffnung 24 der Lagervorrichtung 20 und die Befestigungsöffnung 31 des Gleitlagers 30 sind vorzugsweise zueinander ausgerichtet. In die erste Befestigungsöffnung 24 der Lagervorrichtung 20 und die zu ihr ausgerichtete Befestigungsöffnung 31 des ersten Gleitlagers 30 ist vorzugsweise ein erstes Befestigungsmittel 25a eingefügt, welches durch einen Stahlstift ausgebildet ist.

Ein erster Abstand A1 zwischen dem ersten Gleitlager 30 und dem zweitem Gleitlager 32 ist in Fig. 4 dargestellt. Das zweite Gleitlager 32 ist in die zweite Aufnahmeöffnung 23 der Lagervorrichtung 20 eingesetzt. Das zweite Gleitlager 32 weist vorzugsweise eine Befestigungsöffnung 33 auf. An einem Endabschnitt der Lagervorrichtung 20, welcher benachbart zu der zweiten Aufnahmeöffnung 23 angeordnet ist, ist vorzugsweise eine zweite Befestigungsöffnung 26 ausgebildet. Das zweite Gleitlager 32 ist vorzugsweise schwimmend gelagert und nicht mit einem Befestigungsmittel an der Lagervorrichtung 20 fixiert.

Fig. 5 zeigt eine perspektivische Darstellung der Lagervorrichtung des elektromechanischen Bremskraftverstärkers für das Kraftfahrzeug gemäß der ersten Ausführungsform der Erfindung.

In der vorliegenden Darstellung ist das zweite Gleitlager 32 mittels eines zweiten Befestigungsmittels 25b an der Lagervorrichtung 20 fixiert. Das zweite Befestigungsmittel 25b ist in die Befestigungsöffnung 33 des zweiten Gleitlagers und die zweite Befestigungsöffnung 26 der Lagervorrichtung 20 eingefügt und weist vorzugsweise einen Presssitz auf. Ein zweiter Abstand A2 zwischen dem ersten Gleitlager 30 und dem zweitem Gleitlager 32 ist in Fig. 5 dargestellt, wobei der erste (in Fig. 4 gezeigte) Abstand A1 sich von dem zweiten Abstand A2 unterscheidet.

Aufgrund dessen, dass der erste Abstand A1 sich von dem zweiten Abstand A2 unterscheidet, ist es möglich, einen unterschiedlichen Lochabstand des ersten Gleitlagers 30 zum zweiten Gleitlager 32 vorzusehen, je nachdem, ob das erste Gleitlager 30 oder das zweite Gleitlager 32 mit dem ersten oder zweiten Befestigungsmittel 25a, 25b an der Lagervorrichtung 20 fixiert ist, wobei das jeweils andere Gleitlager schwimmend gelagert ist.

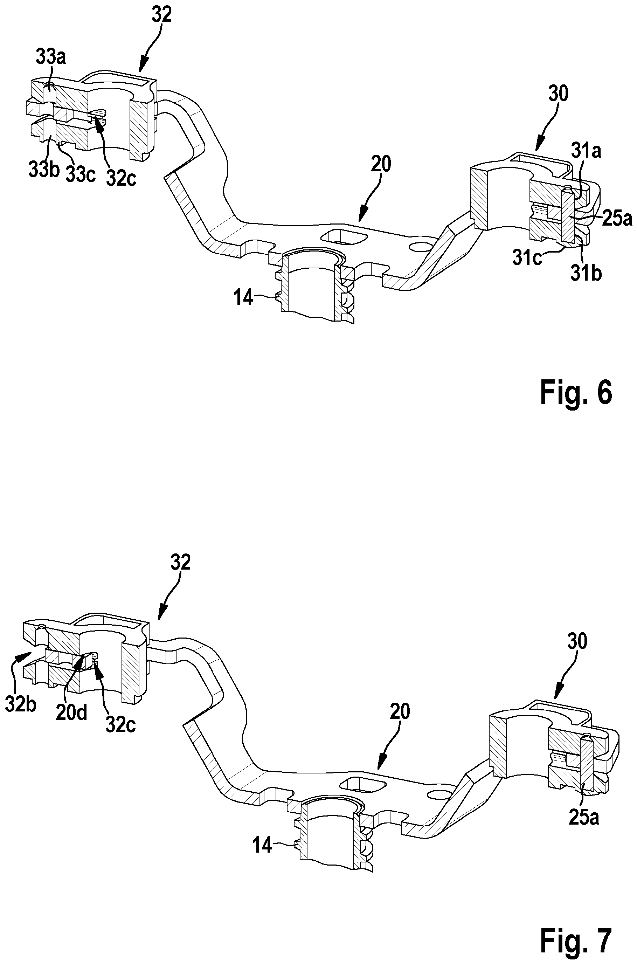

Fig. 6 zeigt eine perspektivische Darstellung der Lagervorrichtung des elektromechanischen Bremskraftverstärkers für das Kraftfahrzeug gemäß der ersten Ausführungsform der Erfindung.

Es erfolgt ein Einsetzen eines zweiten Gleitlagers 32 in eine zweite Aufnahmeöffnung 23 der Lagervorrichtung 20. Bei dem Einsetzen des zweiten Gleitlagers 32 in die zweite Aufnahmeöffnung 23 der Lagervorrichtung 20 umgreift vorzugsweise eine an einem Außenumfang 32a des zweiten Gleitlagers 32 umlaufend ausgebildete Nut 32b eine Wand 20d der Lagervorrichtung 20 im Bereich der zweiten Aufnahmeöffnung 23.

Fig. 7 zeigt eine perspektivische Darstellung der Lagervorrichtung des elektromechanischen Bremskraftverstärkers für das Kraftfahrzeug gemäß der ersten Ausführungsform der Erfindung.

Das zweite Gleitlagers 32 ist in der zweiten Aufnahmeöffnung 23 der Lagervorrichtung 20 mittels einer Transportsicherung 32c befestigbar. Hierbei ist das zweite Gleitlager 32 bei dem Einsetzen in die zweite Aufnahmeöffnung 23 der Lagervorrichtung 20 an einem vorgegebenen Abschnitt der am Außenumfang 32a des zweiten Gleitlagers 32 umlaufend ausgebildeten Nut 32b mit verringerter Breite und/oder Tiefe an einer Wand 20d der Lagervorrichtung 20 festklemmbar.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann die Lagervorrichtung auch eine andere geeignete Form aufweisen bzw. aus einem anderen geeigneten Material ausgebildet sein. Des Weiteren können die Gleitlager beispielsweise in anderer Weise an der Lagervorrichtung befestigbar sein.

### Bezugszeichenliste

- 1: Bremskraftverstärker
- 12: Getriebe
- 12a: Getriebegehäuseboden
- 14: Spindel
- 16: erstes Tragelement
- 18: zweites Tragelement
- 20: Lagervorrichtung
- 20a: Mittenabschnitt
- 20b: erster Endabschnitt
- 20c: zweiter Endabschnitt
- 20d: Wand
- 20e: erster Randbereich
- 20f: zweiter Randbereich
- 22: erste Aufnahmeöffnung
- 23: zweite Aufnahmeöffnung
- 24: erste Befestigungsöffnung
- 25a: erstes Befestigungsmittel
- 25b: zweites Befestigungsmittel
- 26: zweite Befestigungsöffnung
- 30: erstes Gleitlager
- 30a: Außenumfang
- 30b: Nut
- 31: Befestigungsöffnung
- 31a: erste Bohrung
- 31b: zweite Bohrung
- 31c: Absatz
- 32: zweites Gleitlager
- 32a: Außenumfang
- 32b: Nut
- 32c: Transportsicherung
- 33: Befestigungsöffnung
- 33a: erste Bohrung
- 33b: zweite Bohrung
- 33c: Absatz
- 34: erste Aussparung
- 35: zweite Aussparung
- 36: Zahnrad
- A1: erster Abstand
- A2: zweiter Abstand
- M: Mittellängsachse

## Patentansprüche

1. Lagervorrichtung (20) für einen elektromechanischen Bremskraftverstärker (1) eines Kraftfahrzeuges, wobei die Lagervorrichtung (20) an einer Spindel (14) des elektromechanischen Bremskraftverstärkers derart anordbar ist, dass die Spindel (14) mittels eines Betriebs eines Elektromotors des elektromechanischen Bremskraftverstärkers (1) linear verstellbar ist, wodurch die Lagervorrichtung (20) zusammen mit der Spindel (14) mitverstellbar ist, und ein erstes Gleitlager (30) in einer ersten Aufnahmeöffnung (22) der Lagervorrichtung (20) und ein zweites Gleitlager (32) in einer zweiten Aufnahmeöffnung (23) der Lagervorrichtung (20) so einsetzbar oder eingesetzt sind, dass die Lagervorrichtung (20) zusätzlich über das in die erste Aufnahmeöffnung (22) eingesetzte erste Gleitlager (30) an einem ersten Tragelement (16) des elektromechanischen Bremskraftverstärkers (1) anordbar ist und über das in die zweite Aufnahmeöffnung (23) eingesetzte zweite Gleitlager (32) an einem zweiten Tragelement (18) des elektromechanischen Bremskraftverstärkers (18) anordbar ist, so dass die mit der Spindel (14) mitverstellte Lagervorrichtung (20) zwischen den beiden Tragelementen (16, 18) führbar ist, wobei wahlweise bei einer schwimmenden Lagerung des zweiten Gleitlagers (32) in der zweiten Aufnahmeöffnung (23) das erste Gleitlager (30) in der ersten Aufnahmeöffnung (22) fixierbar ist oder bei einer schwimmenden Lagerung des ersten Gleitlagers (16) in der ersten Aufnahmeöffnung (22) das zweite Gleitlager (32) in der zweiten Aufnahmeöffnung (23) fixierbar ist, und wobei, sofern das erste Gleitlager (30) an einem ersten Befestigungsmittel (25a fixiert ist, die Lagervorrichtung (20) zwischen den beiden um einen ersten Abstand beabstandeten Tragelementen anordbar ist, und, sofern das zweite Gleitlager an einem zweiten Befestigungsmittel (25b) fixiert ist, die Lagervorrichtung (20) zwischen den beiden um einen zweiten Abstand beabstandeten Tragelementen anordbar ist.

2. Lagervorrichtung nach Anspruch 1, **dadurch gekennzeichnet, dass** die Lagervorrichtung (20) eine erste Befestigungsöffnung (24) aufweist, an welcher das erste Gleitlager (30) durch Ausrichten einer Befestigungsöffnung (31) des ersten Gleitlagers (30) zu der ersten Befestigungsöffnung (24) der Lagervorrichtung (20) und Einfügen des ersten Befestigungsmittels (25a) in die Befestigungsöffnung (31) des ersten Gleitlagers (30) und die erste Befestigungsöffnung (24) der Lagervorrichtung (20) in der ersten Aufnahmeöffnung (22) fixierbar ist.

3. Lagervorrichtung nach Anspruch 1 oder 2, **dadurch gekennzeichnet, dass** die Lagervorrichtung (20) eine zweite Befestigungsöffnung (26) aufweist, an welcher das zweite Gleitlager (32) durch Ausrichten einer Befestigungsöffnung (33) des zweiten Gleitlagers (32) zu der zweiten Befestigungsöffnung (26) der Lagervorrichtung (20) und Einfügen des zweiten Befestigungsmittels (25b) in die Befestigungsöffnung (33) des zweiten Gleitlagers (32) und die zweite Befestigungsöffnung (26) der Lagervorrichtung (20) in der zweiten Aufnahmeöffnung (23) fixierbar ist.

4. Lagervorrichtung nach Anspruch 2 oder 3, **dadurch gekennzeichnet, dass** die Lagervorrichtung (20) einen Mittenabschnitt (20a), einen ersten Endabschnitt (20b) und einen zweiten Endabschnitt (20c) aufweist, wobei die Lagervorrichtung (20) derart gekröpft ausgebildet ist, dass der Mittenabschnitt (20a) im montierten Zustand der Lagervorrichtung (20) in einer, zu einer Verstellachse (V) der Spindel (14) senkrechten ersten Ebene (E1) angeordnet ist, und wobei der erste Endabschnitt (20b) und der zweite Endabschnitt (20c) der Lagervorrichtung (20) zumindest teilweise in einer, zu der Verstellachse (V) der Spindel (14) senkrechten, von der ersten Ebene (E1) beabstandeten zweiten Ebene (E2) angeordnet sind.

5. Lagervorrichtung nach einem der vorhergehenden Ansprüche, **dadurch gekennzeichnet, dass** der Mittenabschnitt (20a) der Lagervorrichtung (20) in einem ersten Randbereich (20e) eine erste Aussparung (34) und/oder in einem zweiten Randbereich (20f) eine zu der ersten Aussparung (34) achsensymmetrisch angeordnete zweite Aussparung (35) aufweist, welche dazu ausgebildet ist, im montierten Zustand der Lagervorrichtung (20) einen Bauraum für ein Zahnrad (36) des Getriebes (12) bereitzustellen.

6. Elektromechanischer Bremskraftverstärker (1) für ein Kraftfahrzeug mit: einem Elektromotor, welcher über ein Getriebe (12) mit einer Spindel (14) derart verbunden ist, dass die Spindel (14) mittels eines Betriebs des Elektromotors (10) linear so verstellbar ist, dass eine Mittellängsachse (M) der Spindel (14) entlang einer Gerade verstellbar ist, **dadurch gekennzeichnet, dass** der elektromechanische Bremskraftverstärker (1) ein erstes Tragelement (16) und ein zweites Tragelement (18) aufweist, wobei eine Lagervorrichtung (20) an der Spindel (14) derart angeordnet ist, dass die Lagervorrichtung (20) zusammen mit der Spindel (14) verstellbar ist, wobei ein erstes Gleitlager (30) zum Lagern des ersten Tragelements (16) in eine erste Aufnahmeöffnung (22) der Lagervorrichtung (20) eingesetzt ist und ein zweites Gleitlager (32) zum Lagern des zweiten Tragelements (18) in eine zweite Aufnahmeöffnung (23) der Lagervorrichtung (20) eingesetzt ist, wobei die mit der Spindel (14) mitverstellte Lagervorrichtung (20) zwischen den beiden Tragelementen (16, 18) führbar ist, wobei wahlweise bei einer schwimmenden Lagerung des zweiten Gleitlagers in der zweiten Aufnahmeöffnung das erste Gleitlager in der ersten Aufnahmeöffnung fixierbar ist oder bei einer schwimmenden Lagerung des ersten Gleitlagers in der ersten Aufnahmeöffnung das zweite Gleitlager in der zweiten Aufnahmeöffnung fixierbar ist, und wobei, sofern das erste Gleitlager an einem ersten Befestigungsmittel (25a) fixiert ist, das in dem ersten Gleitlager (30) gelagerte erste Tragelement (16) einen ersten Abstand (A1) zum in dem zweiten Gleitlager (32) gelagerten zweiten Tragelement (18) aufweist, und, sofern das zweite Gleitlager (32) an einem zweiten Befestigungsmittel (25b) fixiert ist, das in dem ersten Gleitlager (30) gelagerte erste Tragelement (16) einen zweiten Abstand (A2) ungleich dem ersten Abstand (A1) zum in dem zweiten Gleitlager (32) gelagerten zweiten Tragelement (18) aufweist.

7. Elektromechanischer Bremskraftverstärker nach Anspruch 6, **dadurch gekennzeichnet, dass** das erste Befestigungsmittel (25a) und das zweite Befestigungsmittel (25b) stiftförmig, vorzugsweise durch einen Stahlstift ausgebildet sind, welcher im montierten Zustand in der Befestigungsöffnung (31, 33) des ersten Gleitlagers (30) oder des zweiten Gleitlagers (32) eingepresst ist, wobei die erste Befestigungsöffnung (24) und die zweite Befestigungsöffnung (26) der Lagervorrichtung (20) als Langloch ausgebildet sind.

8. Elektromechanischer Bremskraftverstärker nach Anspruch 7, **dadurch gekennzeichnet, dass** die Befestigungsöffnung (31) des ersten Gleitlagers (30) und des zweiten Gleitlagers (32) eine erste Bohrung (31a, 33a) und eine zweite Bohrung (31b, 33b) aufweist, welche durch eine an einem Außenumfang (30a, 32a) des ersten Gleitlagers (30) und des zweiten Gleitlagers (32) umlaufend ausgebildete Nut (30b, 32b) voneinander getrennt sind, wobei die erste Bohrung (31a, 33a) als Durchgangsbohrung ausgebildet ist und die zweite Bohrung (31b, 33b) einen Absatz (31c, 33c) aufweist, wobei das erste oder zweite Befestigungsmittel (25a, 25b) derart in das erste Gleitlager (30) oder das zweite Gleitlager (32) eingebracht ist, dass dieses an dem Absatz (31c, 33c) der zweiten Bohrung (31b, 33b) anschlägt und die erste Bohrung (31a, 33a) durch einen Verstemmprozess verformt und/oder geschlossen ist.

9. Elektromechanischer Bremskraftverstärker nach Anspruch 8, **dadurch gekennzeichnet, dass** das erste Gleitlager (30) in die erste Aufnahmeöffnung (22) der Lagervorrichtung (20) mittels der an einem Außenumfang des ersten Gleitlagers (30) umlaufend ausgebildeten Nut (30a) eingesetzt ist, wobei zwischen der Lagervorrichtung (20) und der Nut (30a) ein Spalt ausgebildet ist, wobei das erste Gleitlager (30) in der Nut (30a) relativ zu der Lagervorrichtung (20) um eine parallel zur Lagervorrichtung (20) angeordneten Achse dreh- und kippbar gelagert ist, und wobei das zweite Gleitlager (32) in die zweite Aufnahmeöffnung (23) der Lagervorrichtung (20) mittels der an einem Außenumfang des zweiten Gleitlagers (32) umlaufend ausgebildeten Nut (32a) eingesetzt ist, wobei zwischen der Lagervorrichtung (20) und der Nut (32a) ein Spalt ausgebildet ist, wobei das zweite Gleitlager (32) in der Nut (32a) relativ zu der Lagervorrichtung (20) um eine parallel zur Lagervorrichtung (20) angeordneten Achse dreh- und kippbar gelagert ist.

10. Elektromechanischer Bremskraftverstärker nach Anspruch 8 oder 9, **dadurch gekennzeichnet, dass** das erste Gleitlager (30) entlang der am Außenumfang (30a) des ersten Gleitlagers (30) umlaufend ausgebildeten Nut (30b) in die erste Aufnahmeöffnung (22) der Lagervorrichtung (20) eingesetzt ist, wobei eine Form des ersten Gleitlagers (30) an eine Form der ersten Aufnahmeöffnung (22) der Lagervorrichtung (20) angepasst ist, und wobei das zweite Gleitlager (32) entlang der am Außenumfang (32a) des zweiten Gleitlagers (32) umlaufend ausgebildeten Nut (32b) in die zweite Aufnahmeöffnung (23) der Lagervorrichtung (20) eingesetzt ist, wobei eine Form des zweiten Gleitlagers (32) an eine Form der zweiten Aufnahmeöffnung (23) der Lagervorrichtung (20) angepasst ist.

11. Elektromechanischer Bremskraftverstärker nach einem der Ansprüche 8 bis 10, **dadurch gekennzeichnet, dass** die am Außenumfang (30a) des ersten Gleitlagers (30) und des zweiten Gleitlagers (32) umlaufend ausgebildete Nut (30b, 32b) an einem vorgegebenen Abschnitt eine verringerte Breite und/oder Tiefe aufweist, im Bereich welcher das erste Gleitlager (30) oder das zweite Gleitlager (32) bei einem Transport des elektromechanischen Bremskraftverstärkers (1) an einer Wand (20d) der Lagervorrichtung (20) festklemmbar ist.

12. Elektromechanischer Bremskraftverstärker nach einem der Ansprüche 6 bis 11, **dadurch gekennzeichnet, dass** das erste Tragelement (16) und das zweite Tragelement (18) einen Zuganker oder ein Rohr mit innenliegender Durchgangsschraube aufweisen, wobei der Zuganker und das Rohr mit innenliegender Durchgangsschraube aus Stahl ausgebildet sind, und wobei der Zuganker einen geringeren Durchmesser als das Rohr mit innenliegender Durchgangsschraube aufweist.

13. Elektromechanischer Bremskraftverstärker nach einem der Ansprüche 6 bis 12, **dadurch gekennzeichnet, dass** das erste Gleitlager (30) und das zweite Gleitlager (32) baugleich ausgebildet sind.

## Claims

1. Bearing apparatus (20) for an electromechanical brake booster (1) of a motor vehicle, it being possible for the bearing apparatus (20) to be arranged on a spindle (14) of the electromechanical brake booster in such a way that the spindle (14) can be adjusted in a linear manner by means of operation of an electric motor of the electromechanical brake booster (1), as a result of which the bearing apparatus (20) can be adjusted together with the spindle (14), and a first plain bearing (30) being inserted or being capable of being inserted into a first receiving opening (22) of the bearing apparatus (20), and a second plain bearing (32) being inserted or being capable of being inserted into a second receiving opening (23) of the bearing apparatus (20), in such a way that the bearing apparatus (20) can be arranged additionally via the first plain bearing (30) which is inserted into the first receiving opening (22) on a first carrying element (16) of the electromechanical brake booster (1), and it being possible for the said bearing apparatus (20) to be arranged via the second plain bearing (32) which is inserted into the second receiving opening (23) on a second carrying element (18) of the electromechanical brake booster (18), with the result that the bearing apparatus (20) which is adjusted together with the spindle (14) can be guided between the two carrying elements (16, 18), it optionally being possible, in the case of floating mounting of the second plain bearing (32) in the second receiving opening (23), for the first plain bearing (30) to be fixed in the first receiving opening (22) or, in the case of floating mounting of the first plain bearing (16) in the first receiving opening (22), for the second plain bearing (32) to be fixed in the second receiving opening (23), and, if the first plain bearing (30) is fixed on a first fastening means (25a), it being possible for the bearing apparatus (20) to be arranged between the two carrying elements which are spaced apart by a first spacing, and, if the second plain bearing is fixed on a second fastening means (25b), it being possible for the bearing apparatus (20) to be arranged between the two carrying elements which are spaced apart by a second spacing.

2. Bearing apparatus according to Claim 1, **characterized in that** the bearing apparatus (20) has a first fastening opening (24), on which the first plain bearing (30) can be fixed by way of orientation of the fastening opening (31) of the first plain bearing (30) with respect to the first fastening opening (24) of a bearing apparatus (20) and insertion of the first fastening means (25a) into the fastening opening (31) of the first plain bearing (30) and the first fastening opening (24) of the bearing apparatus (20) in the first receiving opening (22).

3. Bearing apparatus according to Claim 1 or 2, **characterized in that** the bearing apparatus (20) has a second fastening opening (26), on which the second plain bearing (32) can be fixed by way of orientation of a fastening opening (33) of the second plain bearing (32) with respect to the second fastening opening (26) of the bearing apparatus (20) and insertion of the second fastening means (25b) into the fastening opening (33) of the second plain bearing (32) and the second fastening opening (26) of the bearing apparatus (20) in the second receiving opening (23).

4. Bearing apparatus according to Claim 2 or 3, **characterized in that** the bearing apparatus (20) has a centre section (20a), a first end section (20b) and a second end section (20c), the bearing apparatus (20) being of elbowed configuration in such a way that, in the mounted state of the bearing apparatus (20), the centre section (20a) is arranged in a first plane (E1) which is perpendicular with respect to an adjusting axis (V) of the spindle (14), and the first end section (20b) and the second end section (20c) of the bearing apparatus (20) being arranged at least partially in a second plane (E2) which is spaced apart from the first plane (E1) and is perpendicular with respect to the adjusting axis (V) of the spindle (14).

5. Bearing apparatus according to one of the preceding claims, **characterized in that** the centre section (20a) of the bearing apparatus (20) has a first cut-out (34) in a first edge region (20e) and/or a second cut-out (35) which is arranged in an axially symmetrical manner with respect to the first cut-out (34) in a second edge region (20f), which cut-out is configured to provide an installation space for a gearwheel (36) of the gear mechanism (12) in the mounted state of the bearing apparatus (20).

6. Electromechanical brake booster (1) for a motor vehicle having: an electric motor which is connected via a gear mechanism (12) to a spindle (14) in such a way that the spindle (14) can be adjusted in a linear manner by means of operation of the electric motor (10), in such a way that a centre longitudinal axis (M) of the spindle (14) can be adjusted along a straight line, **characterized in that** the electromechanical brake booster (1) has a first carrying element (16) and a second carrying element (18), a bearing apparatus (20) being arranged on the spindle (14) in such a way that the bearing apparatus (20) can be adjusted together with the spindle (14), a first plain bearing (30) for mounting the first carrying element (16) being inserted into a first receiving opening (22) of the bearing apparatus (20), and a second plain bearing (32) for mounting the second carrying element (18) being inserted into a second receiving opening (23) of the bearing apparatus (20), it being possible for the bearing apparatus (20) which is adjusted together with the spindle (14) to be guided between the two carrying elements (16, 18), it optionally being possible, in the case of floating mounting of the second plain bearing in the second receiving opening, for the first plain bearing to be fixed in the first receiving opening or, in the case of floating mounting of the first plain bearing in the first receiving opening, for the second plain bearing to be fixed in the second receiving opening, and, if the first plain bearing is fixed on a first fastening means (25a), the first carrying element (16) which is mounted in the first plain bearing (30) being at a first spacing (A1) from the second carrying element (18) which is mounted in the second plain bearing (32), and, if the second plain bearing (32) is fixed on a second fastening means (25b), the first carrying element (16) which is mounted in the first plain bearing (30) being at a second spacing (A2) from the second carrying element (18) which is mounted in the second plain bearing (32), which second spacing (A2) does not equal the first spacing (A1).

7. Electromechanical brake booster according to Claim 6, **characterized in that** the first fastening means (25a) and the second fastening means (25b) are configured in a pin-shaped manner, preferably by way of a steel pin which, in the mounted state, is pressed in the fastening opening (31, 33) of the first plain bearing (30) or the second plain bearing (32), the first fastening opening (24) and the second fastening opening (26) of the bearing apparatus (20) being configured as a slot.

8. Electromechanical brake booster according to Claim 7, **characterized in that** the fastening opening (31) of the first plain bearing (30) and the second plain bearing (32) has a first bore (31a, 33a) and a second bore (31b, 33b) which are separated from one another by way of a groove (30b, 32b) which is configured circumferentially on an outer circumference (30a, 32a) of the first plain bearing (30) and the second plain bearing (32), the first bore (31a, 33a) being configured as a through bore, and the second bore (31b, 33b) having a shoulder (31c, 33c), the first or second fastening means (25a, 25b) being introduced into the first plain bearing (30) or the second plain bearing (32) in such a way that it comes into contact with the shoulder (31c, 33c) of the second bore (31b, 33b), and the first bore (31a, 33a) is deformed and/or closed by way of a caulking process.

9. Electromechanical brake booster according to Claim 8, **characterized in that** the first plain bearing (30) is inserted into the first receiving opening (22) of the bearing apparatus (20) by means of the groove (30a) which is configured circumferentially on an outer circumference of the first plain bearing (30), a gap being configured between the bearing apparatus (20) and the groove (30a), the first plain bearing (30) being mounted in the groove (30a) such that it can be rotated and tilted relative to the bearing apparatus (20) about an axis which is arranged parallel to the bearing apparatus (20), and the second plain bearing (32) being inserted into the second receiving opening (23) of the bearing apparatus (20) by means of the groove (32a) which is configured circumferentially on an outer circumference of the second plain bearing (32), a gap being configured between the bearing apparatus (20) and the groove (32a), the second plain bearing (32) being mounted in the groove (32a) such that it can be rotated and tilted relative to the bearing apparatus (20) about an axis which is arranged parallel to the bearing apparatus (20).

10. Electromechanical brake booster according to Claim 8 or 9, **characterized in that** the first plain bearing (30) is inserted into the first receiving opening (22) of the bearing apparatus (20) along the groove (30b) which is configured circumferentially on the outer circumference (30a) of the first plain bearing (30), a shape of the first plain bearing (30) being adapted to a shape of the first receiving opening (22) of the bearing apparatus (20), and the second plain bearing (32) being inserted into the second receiving opening (23) of the bearing apparatus (20) along the groove (32b) which is configured circumferentially on the outer circumference (32a) of the second plain bearing (32), a shape of the second plain bearing (32) being adapted to a shape of the second receiving opening (23) of the bearing apparatus (20) .

11. Electromechanical brake booster according to one of Claims 8 to 10, **characterized in that** the groove (30b, 32b) which is configured circumferentially on the outer circumference (30a) of the first plain bearing (30) and the second plain bearing (32) has a reduced width and/or depth on a predefined section, in the region of which the first plain bearing (30) or the second plain bearing (32) can be clamped fixedly on a wall (20d) of the bearing apparatus (20) in the case of transport of the electromechanical brake booster (1).

12. Electromechanical brake booster according to one of Claims 6 to 11, **characterized in that** the first carrying element (16) and the second carrying element (18) have a tie rod or a tube with an inner through bolt, the tie rod and the tube with the inner through bolt being configured from steel, and the tie rod having a smaller diameter than the tube with the inner through bolt.

13. Electromechanical brake booster according to one of Claims 6 to 12, **characterized in that** the first plain bearing (30) and the second plain bearing (32) are of structurally identical configuration.

## Revendications

1. Dispositif palier (20) pour un servofrein électromécanique (1) d'un véhicule automobile, le dispositif palier (20) pouvant être disposé sur une broche (14) du servofrein électromécanique de telle sorte que la broche (14) soit déplaçable linéairement au moyen d'un fonctionnement du moteur électrique du servofrein électromécanique (1), de sorte que le dispositif palier (20) soit déplaçable conjointement avec la broche (14), et un premier palier lisse (30) pouvant être inséré ou étant inséré dans une première ouverture de réception (22) du dispositif palier (20) et un deuxième palier lisse (32) pouvant être inséré ou étant inséré dans une deuxième ouverture de réception (23) du dispositif palier (20) de telle sorte que le dispositif palier (20) puisse en outre être disposé sur un premier élément de support (16) du servofrein électromécanique (1) par le biais du premier palier lisse (30) inséré dans la première ouverture de réception (22) et puisse être disposé sur un deuxième élément de support (18) du servofrein électromécanique (18) par le biais du deuxième palier lisse (32) inséré dans la deuxième ouverture de réception (23), de telle sorte que le dispositif palier (20) déplacé conjointement avec la broche (14) puisse être guidé entre les deux éléments de support (16, 18), et sélectivement en cas de montage flottant du deuxième palier lisse (32) dans la deuxième ouverture de réception (23), le premier palier lisse (30) pouvant être fixé dans la première ouverture de réception (22) ou en cas de montage flottant du premier palier lisse (16) dans la première ouverture de réception (22), le deuxième palier lisse (32) pouvant être fixé dans la deuxième ouverture de réception (23), et si le premier palier lisse (30) est fixé à un premier moyen de fixation (25a), le dispositif palier (20) pouvant être disposé entre les deux éléments de support espacés d'une première distance, et si le deuxième palier lisse est fixé à un deuxième moyen de fixation (25b), le dispositif palier (20) pouvant être disposé entre les deux éléments de support espacés d'une deuxième distance.

2. Dispositif palier selon la revendication 1, **caractérisé en ce que** le dispositif palier (20) comprend une première ouverture de fixation (24) au niveau de laquelle le premier palier lisse (30) peut être fixé dans la première ouverture de réception (22) par orientation d'une ouverture de fixation (31) du premier palier lisse (30) par rapport à la première ouverture de fixation (24) du dispositif palier (20) et introduction du premier moyen de fixation (25a) dans l'ouverture de fixation (31) du premier palier lisse (30) et dans la première ouverture de fixation (24) du dispositif palier (20).

3. Dispositif palier selon la revendication 1 ou 2, **caractérisé en ce que** le dispositif palier (20) comprend une deuxième ouverture de fixation (26) au niveau de laquelle le deuxième palier lisse (32) peut être fixé dans la deuxième ouverture de réception (23) par orientation d'une ouverture de fixation (33) du deuxième palier lisse (32) par rapport à la deuxième ouverture de fixation (26) du dispositif palier (20) et introduction du deuxième moyen de fixation (25b) dans l'ouverture de fixation (33) du deuxième palier lisse (32) et dans la deuxième ouverture de fixation (26) du dispositif palier (20) .

4. Dispositif palier selon la revendication 2 ou 3, **caractérisé en ce que** le dispositif palier (20) comprend une partie centrale (20a), une première partie d'extrémité (20b) et une deuxième partie d'extrémité (20c), le dispositif palier (20) étant réalisé de manière contre-coudée de telle sorte que la partie centrale (20a) soit, à l'état monté du dispositif palier (20), disposée dans un premier plan (E1) perpendiculaire à un axe de déplacement (V) de la broche (14), et la première partie d'extrémité (20b) et la deuxième partie d'extrémité (20c) du dispositif palier (20) étant disposées au moins partiellement dans un deuxième plan (E2) espacé du premier plan (E1) et perpendiculaire à l'axe de déplacement (V) de la broche (14).

5. Dispositif palier selon l'une des revendications précédentes, **caractérisé en ce que** la partie centrale (20a) du dispositif palier (20) comprend, dans une première région de bord (20e), un premier évidement (34) et/ou, dans une deuxième région de bord (20f), un deuxième évidement (35) disposé suivant une symétrie axiale par rapport au premier évidement (34), lequel deuxième évidement est réalisé pour fournir un espace d'installation pour une roue dentée (36) de la transmission (12) à l'état monté du dispositif palier (20) .

6. Servofrein électromécanique (1) pour un véhicule automobile, comprenant : un moteur électrique, lequel est relié à une broche (14) par le biais d'une transmission (12), de telle sorte que la broche (14) soit déplaçable linéairement au moyen d'un fonctionnement du moteur électrique (10) de telle sorte qu'un axe médian longitudinal (M) de la broche (14) soit déplaçable le long d'une droite, **caractérisé en ce que** le servofrein électromécanique (1) comprend un premier élément de support (16) et un deuxième élément de support (18), un dispositif palier (20) étant disposé sur la broche (14) de telle sorte que le dispositif palier (20) soit déplaçable conjointement avec la broche (14), un premier palier lisse (30) servant à supporter le premier élément de support (16) étant inséré dans une première ouverture de réception (22) du dispositif palier (20) et un deuxième palier lisse (32) servant à supporter le deuxième élément de support (18) étant inséré dans une deuxième ouverture de réception (23) du dispositif palier (20), le dispositif palier (20) déplacé conjointement avec la broche (14) pouvant être guidé entre les deux éléments de support (16, 18), et sélectivement en cas de montage flottant du deuxième palier lisse dans la deuxième ouverture de réception, le premier palier lisse pouvant être fixé dans la première ouverture de réception ou en cas de montage flottant du premier palier lisse dans la première ouverture de réception, le deuxième palier lisse pouvant être fixé dans la deuxième ouverture de réception, et si le premier palier lisse est fixé à un premier moyen de fixation (25a), le premier élément de support (16) monté dans le premier palier lisse (30) étant disposé à une première distance (A1) du deuxième élément de support (18) monté dans le deuxième palier lisse (32), et si le deuxième palier lisse (32) est fixé à un deuxième moyen de fixation (25b), le premier élément de support (16) monté dans le premier palier lisse (30) étant disposé à une deuxième distance (A2) du deuxième élément de support (18) monté dans le deuxième palier lisse (32), laquelle deuxième distance est différente de la première distance (A1).

7. Servofrein électromécanique selon la revendication 6, **caractérisé en ce que** le premier moyen de fixation (25a) et le deuxième moyen de fixation (25b) sont réalisés en forme de goupilles, de préférence par une goupille en acier, laquelle est enfoncée à l'état monté dans l'ouverture de fixation (31, 33) du premier palier lisse (30) ou du deuxième palier lisse (32), la première ouverture de fixation (24) et la deuxième ouverture de fixation (26) du dispositif palier (20) étant réalisées en tant que trous oblongs.

8. Servofrein électromécanique selon la revendication 7, **caractérisé en ce que** l'ouverture de fixation (31) du premier palier lisse (30) et du deuxième palier lisse (32) comprend un premier alésage (31a, 33a) et un deuxième alésage (31b, 33b), lesquels sont séparés l'un de l'autre par une rainure (30b, 32b) réalisée de manière périphérique au niveau d'une périphérie extérieure (30a, 32a) du premier palier lisse (30) et du deuxième palier lisse (32), le premier alésage (31a, 33a) étant réalisé en tant qu'alésage traversant et le deuxième alésage (31b, 33b) comprenant un épaulement (31c, 33c), le premier ou le deuxième moyen de fixation (25a, 25b) étant introduit dans le premier palier lisse (30) ou le deuxième palier lisse (32) de telle sorte que celui-ci bute contre l'épaulement (31c, 33c) du deuxième alésage (31b, 33b) et que le premier alésage (31a, 33a) soit déformé et/ou fermé par un processus de matage.

9. Servofrein électromécanique selon la revendication 8, **caractérisé en ce que** le premier palier lisse (30) est inséré dans la première ouverture de réception (22) du dispositif palier (20) au moyen de la rainure (30a) réalisée de manière périphérique au niveau d'une périphérie extérieure du premier palier lisse (30), un interstice étant réalisé entre le dispositif palier (20) et la rainure (30a), le premier palier lisse (30) étant monté dans la rainure (30a) de manière à pouvoir tourner et basculer par rapport au dispositif palier (20) autour d'un axe disposé parallèlement au dispositif palier (20), et le deuxième palier lisse (32) étant inséré dans la deuxième ouverture de réception (23) du dispositif palier (20) au moyen de la rainure (32a) réalisée de manière périphérique au niveau d'une périphérie extérieure du deuxième palier lisse (32), un interstice étant réalisé entre le dispositif palier (20) et la rainure (32a), le deuxième palier lisse (32) étant monté dans la rainure (32a) de manière à pouvoir tourner et basculer par rapport au dispositif palier (20) autour d'un axe disposé parallèlement au dispositif palier (20).

10. Servofrein électromécanique selon la revendication 8 ou 9, **caractérisé en ce que** le premier palier lisse (30) est inséré dans la première ouverture de réception (22) du dispositif palier (20) le long de la rainure (30b) réalisée de manière périphérique au niveau de la périphérie extérieure (30a) du premier palier lisse (30), une forme du premier palier lisse (30) étant adaptée à une forme de la première ouverture de réception (22) du dispositif palier (20), et le deuxième palier lisse (32) étant inséré dans la deuxième ouverture de réception (23) du dispositif palier (20) le long de la rainure (32b) réalisée de manière périphérique au niveau de la périphérie extérieure (32a) du deuxième palier lisse (32), une forme du deuxième palier lisse (32) étant adaptée à une forme de la deuxième ouverture de réception (23) du dispositif palier (20).

11. Servofrein électromécanique selon l'une des revendications 8 à 10, **caractérisé en ce que** la rainure (30b, 32b) réalisée de manière périphérique au niveau de la périphérie extérieure (30a) du premier palier lisse (30) et du deuxième palier lisse (32) présente une largeur et/ou une profondeur réduites au niveau d'une partie prédéfinie dans la région de laquelle le premier palier lisse (30) ou le deuxième palier lisse (32) peut être serré fixement sur une paroi (20d) du dispositif palier (20) lors d'un transport du servofrein électromécanique (1).

12. Servofrein électromécanique selon l'une des revendications 6 à 11, **caractérisé en ce que** le premier élément de support (16) et le deuxième élément de support (18) comprennent un tirant d'ancrage ou un tube à vis traversante située à l'intérieur, le tirant d'ancrage et le tube à vis traversante située à l'intérieur étant réalisés à partir d'acier, et le tirant d'ancrage présentant un diamètre inférieur à celui du tube à vis traversante située à l'intérieur.

13. Servofrein électromécanique selon l'une des revendications 6 à 12, **caractérisé en ce que** le premier palier lisse (30) et le deuxième palier lisse (32) sont de construction identique.
